# EUROPÄISCHE PATENTSCHRIFT

(11) **EP 1 666 195 B1**
(45) Veröffentlichungstag und Bekanntmachung des Hinweises auf die Patenterteilung: **18.04.2007**
(21) Anmeldenummer: 05405626.2
(22) Anmeldetag: 10.11.2005
(51) Int. Cl.: B23Q 1/00, B23Q 11/00, B23Q 7/14

(54) **Spanneinrichtung zum lösbaren Fixieren einer Palette mit einem Dämpfungselement**
Pallet clamping device with a damping element
Système de fixation d'une pallette avec un élément amortisseur

(30) Priorität: 01.12.2004 CH 19802004
(43) Veröffentlichungstag der Anmeldung: 07.06.2006
(73) Patentinhaber: Erowa AG, CH-5734 Reinach (CH)
(72) Erfinder: Hediger, Hans, 5734 Reinach (CH)
(74) Vertreter: Rottmann, Maximilian

(56) Entgegenhaltungen:
- EP-A- 0 937 537
- EP-A- 1 044 763

## Beschreibung

Die vorliegende Erfindung bezieht sich auf eine gemäss dem Oberbegriff des Anspruchs 1 ausgebildete Spanneinrichtung (siehe, z.B., EP-0937537-A).

Spanneinrichtungen der hier zur Rede stehenden Art dienen dem präzisen, positionsdefinierten Aufspannen von Werkstücken im Arbeitsbereich einer Bearbeitungsmaschine. Das Werkstück wird dabei üblicherweise zuerst an einer Palette befestigt, welch letztere lösbar am Spannfutter fixierbar ist. Alternativ kann jedoch auch das Werkstück selber die Palette bilden. Das Spannfutter selber wird im Regelfall fest mit der Arbeitsmaschine verbunden. Gattungsgemäss Spanneinrichtungen kommen beispielsweise an Fräs-, Schleif-, Polier- oder Erodiermaschinen zum Einsatz.

Eine Problematik beim Bearbeiten von Werkstücken besteht darin, dass das Bearbeitungswerkzeug und/oder allfällige Reinigungsflüssigkeiten die Spanneinrichtung in Schwingung versetzen können, wodurch letztlich die Oberflächengüte des Werkstücks negativ beeinflusst wird.

Aus der EP-A-1 044 763 ist ein Halter zum exakten Positionieren eines Werkstücks im Arbeitsbereich einer Werkzeugmaschine bekannt, der mit einem Schwingungsdämpfer versehen ist. Durch das Vorsehen eines Schwingungsdämpfers soll der vorgängig genannten Problematik begegnet werden. Der Halter weist zum einen Befestigungselemente zum Befestigen an einer festen Trägerstruktur und zum anderen Halteteile zum Halten des Werkstücks auf. Der Halter ist in Form eines sogenannten Nivellier- oder Pendelkopfs ausgebildet, an welchem ein Werkstück befestigt und in drei Richtungen feinjustiert werden kann. Damit kann das Werkstück gegenüber der Werkzeugmaschine sehr genau ausgerichtet werden. Der genannte Schwingungsdämpfer soll dabei insbesondere die beim Elektroerodieren durch die Spülflüssigkeit auf das Werkstück und den Halter übertragene Schwingungsenergie absorbieren. Als Materialien für den Schwingungsdämpfer werden insbesondere Gummi oder gummiartige Werkstoffe vorgeschlagen.

Aus der DE-A-199 17 104 ist ein weiterer, mit einem Schwingungsdämpfer versehener Halter bekannt. Neben bzw. zusätzlich zu dem Schwingungsdämpfer ist ein Bereich vorhanden, in welchem sich der Halter und die Trägerstruktur und/oder das Werkstück direkt kontaktieren. Dadurch soll eine Befestigung geschaffen werden, die teilweise hart und teilweise schwingungsdämpfend gestaltet ist. Ein solcher Halter soll sich insbesondere für die Befestigung von Werkstücken eignen, die einer spanabhebenden oder läppenden Bearbeitung unterzogen werden.

Die vorliegende Erfindung hat sich zum Ziel gesetzt, eine mit einem Dämpfungselement versehene Spanneinrichtung derart auszugestalten, dass sie stabil ist, eine grosse Steifigkeit aufweist jedoch trotzdem gute Dämpfungseigenschaften besitzt.

Dazu wird definitionsgemäss eine Spanneinrichtung vorgeschlagen, welche mit den im Anspruch 1 angeführten Merkmalen versehen ist.

Ein durch einen komprimierten Verbund aus Metallspänen gebildetes Dämpfungselement ist relativ steif und besitzt im Hinblick auf die zu erwartenden Belastungen beim mechanischen Bearbeiten des am Spannfutter bzw. an der Palette festgespannten Werkstücks gute Dämpfungseigenschaften.

Bevorzugte Ausführungsformen und Weiterbildungen des Erfindungsgegenstandes sind in den abhängigen Ansprüchen 2 bis 8 umschrieben.

Im Folgenden wird ein Ausführungsbeispiel der erfindungsgemässen Spanneinrichtung unter Bezugnahme auf die beiliegenden Zeichnungen näher erläutert. In den Zeichnungen zeigt:
- Fig. 1: eine perspektivische Ansicht eines Spannfutters sowie einer Palette;
- Fig. 2: einen Längsschnitt durch das Spannfutter und die Palette.

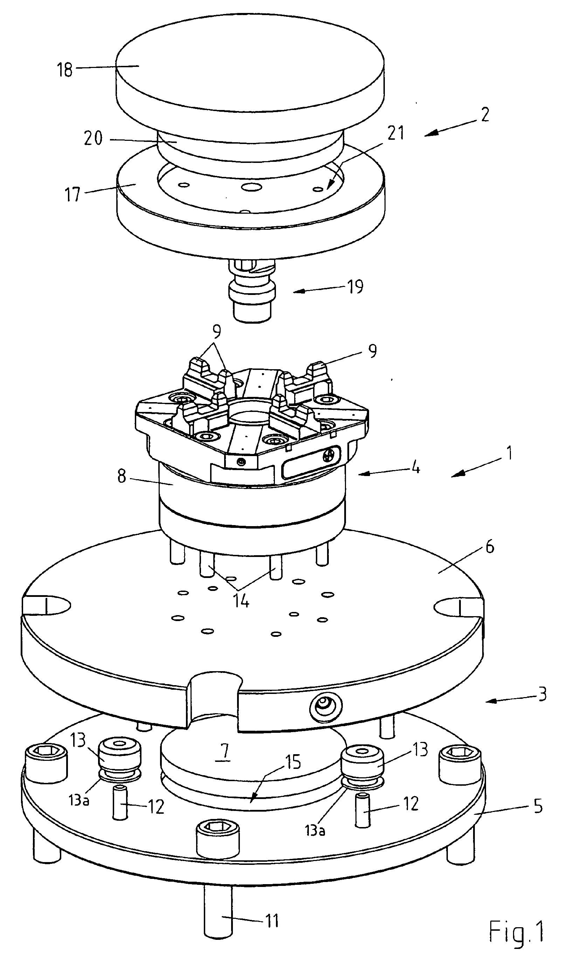

In der Fig. 1 ist das Spannfutter 1 sowie die Palette 2 mitsamt einigen Einzelteilen in einer perspektivischen Ansicht dargestellt. Das Spannfutter 1 besteht im wesentlichen aus einem Unterteil 3 und einem Oberteil 4. Der Unterteil 3 des Spannfutters 1 wird durch eine runde Grundplatte 5, eine runde Trägerplatte 6 und ein zwischengefügtes Dämpfungselement 7 gebildet. Der Oberteil 4 des Spannfutters 1 besteht aus einem zylindrischen Spanngehäuse 8, das auf der Innenseite mit Spannelementen in Form von Spannkugeln (nicht dargestellt) und auf der Oberseite mit Zentrierelementen in Form von vorstehenden Zentrierzapfen 9 versehen ist. Die Befestigung der Grundplatte 5 an einer Bearbeitungsmaschine erfolgt mittels Befestigungselementen 11, während zum Fixieren der Trägerplatte 6 an der Grundplatte 5 Schrauben 12 vorgesehen sind, welche in dübelartigen Muttern 13 verankert werden. Zur Aufnahme dieser dübelartigen Muttern 13, sind in die Unterseite der Trägerplatte 6 Sackbohrungen (nicht dargestellt) eingelassen. Die dübelartigen Muttern 13 sind aus einem zäh-elastischen Grundmaterial gefertigt und auf der Innenseite mit einem Stahl-Gewinde versehen. In dem der Grundplatte 5 zugewandten Endbereich sind die dübelartigen Muttern 13 mit einem Bund 13a versehen, dessen Bedeutung anschliessend noch näher erläutert wird. Das Spanngehäuse 8 wird ebenfalls mittels Schrauben 14 an der Trägerplatte 6 befestigt. Zur Aufnahme des Dämpfungselements 7 ist sowohl die Grundplatte 5 wie auch die Trägerplatte 6 mit je einer runden, in der Form mit dem Dämpfungselement 7 korrespondierenden Ausnehmung versehen, wobei aus dieser Darstellung nur die in die Grundplatte 5 eingelassene Ausnehmung 15 ersichtlich ist.

Die Palette 2 ihrerseits besteht aus einer runden Basisplatte 17 und einer runden Aufnahmeplatte 18. Auf der Unterseite der Basisplatte 17 ist ein Spannbolzen 19 befestigt, mittels welchem die Palette 2 an dem Spannfutter 1 festgespannt werden kann. Auf der Unterseite der Basisplatte 17 ist zudem eine federelastische Scheibe (nicht ersichtlich) befestigt, welche mit mehreren, nutförmigen Ausnehmungen versehen ist, die in der Form und Lage mit den Zentrierzapfen 9 des Spannfutters 1 korrespondieren und der Ausrichtung der Palette in X- und Y-Richtung dienen. Zwischen der Basisplatte 17 und der Aufnahmeplatte 18 ist wiederum ein Dämpfungselement 20 eingefügt. Auch in diesem Fall sind beide Platten 17, 18 mit je einer runden, in der Form mit dem Dämpfungselement korrespondierenden Ausnehmung versehen, wobei aus dieser Darstellung nur die in die Basisplatte 17 eingelassene Ausnehmung 21 ersichtlich ist.

Im vorliegenden Beispiel bildet die Aufnahmeplatte 18 einen integralen Teil der Palette. Zum Befestigen des zu bearbeitenden Werkstücks ist die Aufnahmeplatte 18 auf der Oberseite mit Befestigungselementen beispielsweise in Form von Bohrungen versehen, welche aus dieser Darstellung jedoch nicht ersichtlich sind.

Sowohl das Dämpfungselement 7 des Spannfutters 1 wie auch das Dämpfungselement 20 der Palette 2 wird durch eine Vielzahl von Stahlspänen gebildet, welche durch Pressen zu einem komprimierten Verbund aus Metallspänen zusammengefügt sind. Die Presskraft, mit der die Späne zu dem Verbund zusammengepresst werden, kann dabei von einigen zehn bis zu mehreren hundert Kilo Newton betragen. Je nach Anwendung kann dieser komprimierte Verbund aus Metallspänen auch in eine Vergussmasse eingebettet sein. Das jeweilige Dämpfungselement weist vorzugsweise eine zylindrische Grundform auf, wobei natürlich auch davon abweichende Formen, beispielsweise mit quadratischem oder kreisringförmigem Querschnitt, möglich sind.

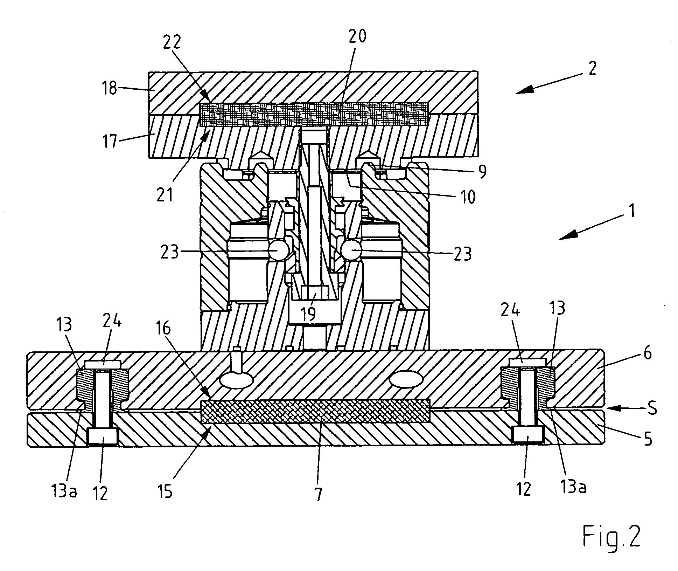

Fig. 2 zeigt einen Längsschnitt durch das Spannfutter 1 und die daran festgespannte Palette 2. Aus dieser Darstellung ist ersichtlich, dass die Trägerplatte 6 mit der Grundplatte 5 verschraubt ist. Die Schrauben 12 sind in den dübelartigen Muttern 13 verankert, welche letztere sich beim Einschrauben der jeweiligen Schraube 12 wie ein Dübel radial aufweiten und in der jeweiligen Sackbohrung 24 der Trägerplatte 6 festklemmen. Indem die Schrauben 12 mittels zähelastischen Muttern 13 in der Trägerplatte 6 fixiert sind, wird über die Schrauben 12 eine elastische Verbindung zwischen der Trägerplatte 6 und der Grundplatte 5 erreicht. Neben der Schraubverbindung sind die beiden Platten 5, 6 insbesondere über das Dämpfungselement 7 verbunden. Die Dicke des Dämpfungselements 7 ist dabei so gewählt, dass nach dem Festziehen der Schrauben 12 ein Spalt S zwischen der Trägerplatte 6 und der Grundplatte 5 verbleibt. Die Dicke des jeweiligen Bunds 13a der dübelartigen Muttern 13 ist dabei an das Übermass des Dämpfungselements 7 angepasst, so dass sichergestellt werden kann, dass sich die beiden Platten 5, 6 beim Festziehen der Schrauben 12 nicht durchbiegen. Der Spalt S wird vorzugsweise mit einer Vergussmasse gefüllt oder zumindest entlang des Randes abgedichtet, um das Eindringen von Staubpartikeln, Flüssigkeiten, Spänen oder dergleichen zu verhindern.

Im weiteren ist die auf der Unterseite der Palette 2 befestigte, federelastische Scheibe 10 ersichtlich, welche mit nutförmigen Ausnehmungen versehen ist, in die die Zentrierzapfen 9 des Spannfutters 1 eingreifen und die Palette in X- und Y-Richtung positionieren. Zum Positionieren der Palette 2 in Z-Richtung sind Abstandhalter vorgesehen, welche bevorzugt an der Palette 2 befestigt, jedoch aus dieser Darstellung nicht ersichtlich sind.

Die Palette 2 wird in bekannter Weise mittels Spannkugeln 23, welche an einer Schulter des Spannzapfens 19 der Palette 2 angreifen, am Spannfutter 1 festgespannt.

Das Dämpfungselement 20 zwischen der Basisplatte 17 und der Aufnahmeplatte 18 ist mittels Kleben befestigt. Dazu ist das Dämpfungselement 20 sowohl in die Ausnehmung 21 der Basisplatte 17 wie auch in die Ausnehmung 22 der Aufnahmeplatte 18 eingeklebt. Auch in diesem Fall besteht zwischen den beiden Platten 17, 18 ein Spalt, der allerdings nur einige Zehntelmillimeter beträgt. Der Spalt wird vorzugsweise wiederum mit einer Vergussmasse gefüllt oder zumindest entlang des Randes abgedichtet. Diese alternative Möglichkeit der Fixierung des Dämpfungselements 20 hat den Vorteil, dass keine weitere, die Dämpfungseigenschaften ggf. beeinflussende Verbindung zwischen den beiden Platten 17, 18 besteht. Es versteht sich, dass die Art der Fixierung des Dämpfungselements den Anforderungen entsprechend unterschiedlich gewählt werden kann.

Obwohl im dargestellten Ausführungsbeispiel sowohl das Spannfutter 1 wie auch die Palette 2 mit je einem Dämpfungselement 7, 20 versehen sind, kann es je nach Anwendungsfall durchaus genügen, entweder nur das Spannfutter 1 oder nur die Palette 2 mit einem Dämpfungselement zu versehen. Im weiteren kann auch die Dämpfungscharakteristik des aus einer Vielzahl von Stahlspänen bestehenden Dämpfungselements, welche Späne durch Pressen zu dem komprimierten Verbund aus Metallspänen zusammengefügt sind, verändert werden. Als Parameter, welche die Dämpfungscharakteristik beeinflussen können, kann die Grösse und Dicke der Späne, die Grösse und Dicke des gesamten Verbunds, das Spanmaterial sowie die Presskraft, mittels welcher die Späne zu dem Verbund zusammengepresst werden, erwähnt werden.

## Patentansprüche

1. Spanneinrichtung mit einem Spannfutter (1) und einer lösbar daran fixierbaren Palette (2), wobei das Spannfutter (1) mit Spannmitteln (23) zum Festspannen der Palette (2) versehen ist, und wobei das Spannfutter (1) mit ersten Zentrierelementen (9) versehen ist, welche mit an der Palette angeordneten zweiten Zentrierelementen (10) zusammenwirken, und wobei das Spannfutter (1) und/oder die Palette (2) mit zumindest einem Dämpfungselement (7, 20) versehen ist/sind, **dadurch gekennzeichnet, dass** das Dämpfungselement (7, 20) zumindest teilweise aus einem komprimierten Verbund aus Metallspänen besteht.

2. Spanneinrichtung nach Anspruch 1, **dadurch gekennzeichnet, dass** das Spannfutter (1) und/oder die Palette (2) mit zumindest einer Ausnehmung (15, 16; 21, 22) zur Aufnahme des Dämpfungselements (7, 20) versehen ist.

3. Spanneinrichtung nach Anspruch 2, **dadurch gekennzeichnet, dass** das Dämpfungselement (7, 20) in die Ausnehmung (15, 16; 21, 22) eingeklebt ist.

4. Spanneinrichtung nach Anspruch 1 oder 2, **dadurch gekennzeichnet, dass** das Dämpfungselement (7) zwischen zwei Platten (5, 6) angeordnet ist, welche beiden Platten (5, 6) mittels Verbindungselementen (12) verbunden sind, wobei die Verbindungselemente (12) zumindest in der einen Platte (6) mittels elastischen Zwischenelementen (13) verankert sind.

5. Spanneinrichtung nach einem der vorhergehenden Ansprüche, **dadurch gekennzeichnet, dass** das Spannfutter (1) mit einer Grundplatte (5) und einer Trägerplatte (6) versehen ist und das Dämpfungselement (7) zwischen die Grundplatte (5) und die Trägerplatte (6) eingefügt ist.

6. Spanneinrichtung nach einem der vorhergehenden Ansprüche, **dadurch gekennzeichnet, dass** das Dämpfungselement (7, 20) mehrheitlich aus rostfreien Metallspänen besteht, welche mittels Pressen zu dem komprimierten Verbund zusammengepresst sind.

7. Spanneinrichtung nach Anspruch 6, **dadurch gekennzeichnet, dass** die Metallspäne in eine Vergussmasse aus Kunststoff eingebettet sind.

8. Spanneinrichtung nach einem der vorhergehenden Ansprüche, **dadurch gekennzeichnet, dass** das Dämpfungselement (7, 20) eine zylindrische oder kubische Grundform aufweist.

## Claims

1. Clamping device with a clamping chuck (1) and with a pallet (2) capable of being fixed releasably to the latter, the clamping chuck (1) being provided with clamping means (23) for the firm clamping of the pallet (2), the clamping chuck (1) being provided with first centring elements (9) which cooperate with second centring elements (10) arranged on the pallet, and the clamping chuck (1) and/or the pallet (2) being provided with at least one damping element (7, 20), **characterized in that** the damping element (7, 20) consists at least partially of a compressed composite structure composed of metal chips.

2. Clamping device according to Claim 1, **characterized in that** the clamping chuck (1) and/or the pallet (2) are/is provided with at least one recess (15, 16; 21, 22) for receiving the damping element (7, 20).

3. Clamping device according to Claim 2, **characterized in that** the damping element (7, 20) is glued into the recess (15, 16; 21, 22).

4. Clamping device according to Claim 1 or 2, **characterized in that** the damping element (7) is arranged between two plates (5, 6), which two plates (5, 6) are connected by means of connection elements (12), the connection elements (12) being anchored at least in one plate (6) by means of elastic intermediate elements (13).

5. Clamping device according to one of the preceding claims, **characterized in that** the clamping chuck (1) is provided with a base plate (5) and with a carrier plate (6), and the damping element (7) is inserted between the base plate (5) and the carrier plate (6).

6. Clamping device according to one of the preceding claims, **characterized in that** the damping element (7, 20) consists in the majority of rust-free metal chips which are pressed together into the compressed composite structure by means of pressing.

7. Clamping device according to Claim 6, **characterized in that** the metal chips are embedded into a grouting compound consisting of plastic.

8. Clamping device according to one of the preceding claims, **characterized in that** the damping element (7, 20) has a cylindrical or cubic basic shape.

## Revendications

1. Dispositif de serrage avec un mandrin de serrage (1) et avec une palette (2) pouvant être fixée de manière amovible sur le mandrin de serrage (1), celui-ci étant pourvu de moyens de serrage (23) pour la fixation de la palette par serrage, le mandrin de serrage (1) étant pourvu de premiers éléments de centrage (9) qui concourent avec de seconds éléments de centrage (10) disposés sur le mandrin de serrage (1), le mandrin de serrage (1) et/ou la palette (2) étant pourvus d'un élément amortisseur (7, 20) au moins, **caractérisé en ce que** l'élément amortisseur (7, 20) est constitué au moins partiellement d'un composite de copeaux métalliques comprimés.

2. Dispositif de serrage suivant la revendication 1, **caractérisé en ce que** le mandrin de serrage (1) et/ou la palette (2) sont pourvus d'un évidement (15, 16 ; 21, 22) au moins destiné à recevoir l'élément amortisseur (7, 20).

3. Dispositif de serrage suivant la revendication 2, **caractérisé en ce que** l'élément amortisseur (7, 20) est collé dans l'évidement (15, 16 ; 21, 22).

4. Dispositif de serrage suivant la revendication 1 ou 2, **caractérisé en ce que** l'élément amortisseur (7) est disposé entre deux plaques (5, 6) qui sont reliées au moyen d'éléments de liaison (12) qui sont ancrés au moins dans l'une des deux plaques (6) au moyen d'éléments intermédiaires élastiques (13).

5. Dispositif de serrage suivant une des revendications précédentes, **caractérisé en ce que** le mandrin de serrage (1) est pourvu d'une plaque de base (5) et d'une plaque porteuse (6) et que l'élément amortisseur (7) est inséré entre la plaque de base (5) et la plaque porteuse (6).

6. Dispositif de serrage suivant une des revendications précédentes, **caractérisé en ce que** l'élément amortisseur (7, 20) est principalement constitué de copeaux métalliques inoxydables qui sont comprimés par pressage pour former le composite comprimé.

7. Dispositif de serrage suivant la revendication 6, **caractérisé en ce que** les copeaux métalliques sont noyés dans une masse de scellement en matière artificielle.

8. Dispositif de serrage suivant une des revendications précédentes, **caractérisé en ce que** l'élément amortisseur (7, 20) présente une forme fondamentale cylindrique ou cubique.
